# EUROPEAN PATENT APPLICATION

(11) **EP 2 278 769 A2**
(43) Date of publication of application: **26.01.2011**
(21) Application number: 10169031.1
(22) Date of filing: 09.07.2010
(51) Int. Cl.: H04L 29/06

(54) **System, method, and apparatus for data communication**

(30) Priority: 17.07.2009 JP 2009168807
(71) Applicant: Sony Corporation, Tokyo 108-0075 (JP)
(72) Inventor: Teruyama, Katsuyuki, Tokyo 108-0075 (JP); Shimoji, Katsuya, Tokyo 108-0075 (JP); Miyakawa, Keiichiro, Tokyo 108-0075 (JP)
(74) Representative: Körber, Martin Hans

(57) **Abstract**

A system, method, and apparatus for data communication including a transmitter and first processor for data transmission in at least two states of operation, a receiver, memory device, and second processor providing at least two states of operation for processing the data. In a ready state, received data is ready for processing upon reception. In an active state, received data is converted into a different format prior to processing. The transmitter transmits first data associated with the ready state, a first transition command associated with transitioning from the ready state to the active state, second data associated with the active state, and a second transition command associated with transitioning from the active state to the ready state. The second processor processes the first data in the ready state, transitions to the active state, processes the second data in the active state, and transitions to the ready state.

## Description

### CROSS REFERENCES TO RELATED APPLICATIONS

The present application claims priority to Japanese Priority Patent Application JP 2009-168807 filed in the Japan Patent Office on July 17, 2009, the entire content of which is hereby incorporated by reference.

### BACKGROUND

The present disclosure relates to a system, method, and apparatus for data communication and specifically, for example, in noncontact near-field wireless communication, to a receiving device, a receiving method, a program, and a transmitting device and method that enable transmission and reception of data configured by a data structure or format different from a predetermined data structure or format using a communication scheme for transmitting and receiving data configured by the predetermined data structure or fonnat.

The prior art provides a noncontact near-field wireless communication technology for performing transmission and reception of data using electromagnetic waves between a reader writer and an IC (integrated circuit) card, or the like.

In the noncontact near-field wireless communication technology, there are plural standards different in command system, communication scheme, data structure or format, or the like. Therefore, for example, in the case where a reader writer and an IC card are respectively compliant to different standards, transmission and reception of data may be impossible between the reader writer and the IC card.

Accordingly, there is a through command technology by which a through reader is provided between an IC card and a reader writer and the through reader includes commands from IC cards that transmit commands respectively compliant to different standards in through commands that can be recognized by the reader writer and supplies them to the reader writer (e.g., see JP-A-2004-264921).

According to the through command technology, the reader writer can receive commands from IC cards compliant to different standards via the through reader as through commands.

Further, there is a transmission and reception technology, for example, in the case where data structures are different between a first message to be transmitted and received between a reader writer and an IC card and a second message to be processed in the reader writer and the IC card, of including the second message in the first message and performing transmission and reception (e.g., see JP-A-2005-242445).

According to the transmission and reception technology, the second message included in the first message can be processed in the reader writer and the IC card while transmission and reception of the first message are performed between the reader writer and the IC card.

In JIS (Japanese industrial standard) X 6319-4, which is a standard of noncontact near-field wireless communication, noncontact near-field wireless communication is prescribed to use a communication scheme for transmitting and receiving frames as data configured by a data structure (format) defined in JIS X 6319-4 (hereinafter, referred to as "frame communication scheme").

However, in JIS X 6319-4, transmission and reception using the frame communication scheme via noncontact near-field wireless communication of blocks as data configured by a data structure defined in ISO/IEC (international organization for standardization/international electrotechnical commission) 14443-4, commands defined in ISO/IEC 7816-4, responses to the commands, or the like are not prescribed.

Accordingly, it has been impossible to transmit and receive the blocks having the data structure defined in ISO/IEC14443-4, commands defined in ISO/IEC 7816-4, responses to the commands, or the like using only the frame communication scheme. This is much the same for the above described through command technology and transmission and reception technology.

Thus, it is desirable to enable transmission and reception of data configured by a data structure or format different from a predetermined data structure or format using a communication scheme for transmitting and receiving data configured by the predetermined data structure or format.

### SUMMARY

In an example embodiment, a system for data communication includes a first device including a transmitter for transmitting data, and a first processor operably coupled to the transmitter, the first processor preparing data for transmission in at least two states of operation including a ready state and an active state, and a second device including: a receiver for receiving data, a memory device, and a second processor operably coupled to the receiver and to the memory device, the second processor providing the at least two states of operation including the ready state and the active state for processing the received data upon reception of the data, wherein, in the ready state, the received data is ready for processing upon reception of the data, wherein, in the active state, the received data is converted into a different format prior to processing upon reception of the data, wherein the first processor provides to the transmitter and the transmitter transmits (i) first data associated with the ready state, which is ready for processing upon reception, (ii) a first transition command associated with transitioning from the ready state to the active state, (iii) second data associated with the active state, which is converted into a different format upon reception, and (iv) a second transition command associated with transitioning from the active state to the ready state, wherein the receiver receives and provides to the second processor the first data, the first transition command, the second data, and the second transition command, and the second processor causes data indicative of the at least one transition command to be stored in the memory device, and wherein the second processor (i) processes the first data in the ready state, (ii) transitions to the active state based on the first transition command, (iii) processes the second data in the active state, and (iv) transitions to the ready state based on the second transition command.

In an example embodiment, in the ready state, data is processed using JIS X 6319-4 protocol.

In an example embodiment, in the ready state, upon reception of the data, the received data is formatted according to the JIS X 6319-4 protocol.

In an example embodiment, the ready state includes a ready-requested substate and a ready-declared substate, in the ready-requested substate, a response including an identifier is provided to transition into the ready-declared substate, and in the ready-declared substate, processing is performed when a processing command including the identifier is received.

In an example embodiment, in the ready-declared substate, the processing command including the identifier causes a transition from the ready-declared substate to a JIS-active state, in which the processing is performed.

In an example embodiment, the ready-declared substate causes commands to be processed and responses to be formed using JIS X 6319-4 protocol.

In an example embodiment, in the active state, data is processed using at least one of ISO/IEC 7816-4 protocol and ISO/IEC 14443-4 protocol.

In an example embodiment, in the active state, upon reception of the data, the received data is formatted according to a protocol other than the at least one of ISO/IEC 7816-4 protocol and ISO/IEC 14443-4 protocol.

In an example embodiment, at least one transition command causes a transition to a halt state, which prohibits a direct transition from the halt state to the ready state and from the halt state to the active state.

In an example embodiment, the at least one transition command includes a third transition command and a fourth transition command, the third transition command causing a transition from the ready state to the halt state and the fourth transition command causing a transition from the active state to the halt state.

In an example embodiment, a third transition command causes a transition from the halt state to an idle state, which allows for a direct transition from the idle state to the ready state based on a fourth transition command.

In an example embodiment, the first device is a reader writer and the second device is an integrated circuit card ("IC card").

In an example embodiment, an apparatus for data communication includes a transmitter for transmitting data, and at least one processor operably coupled to the transmitter, the at least one processor preparing data for transmission in at least two states of operation including a ready state and an active state, wherein, in the ready state, data ready for transmission is ready for processing upon reception of the data, wherein, in the active state, data ready for transmission is converted into a different format prior to processing upon reception of the data, wherein the at least one processor provides to the transmitter (i) first data associated with the ready state, which is ready for processing upon reception, (ii) a first transition command associated with transitioning from the ready state to the active state, (iii) second data associated with the active state, which is converted into a different format upon reception, and (iv) a second transition command associated with transitioning from the active state to the ready state.

In an example embodiment, the apparatus is an IC card.

In an example embodiment, the apparatus is a reader writer.

In an example embodiment, an apparatus for data communication includes a receiver for receiving data, a memory device, and at least one processor operably coupled to the receiver and to the memory device, the at least one processor providing at least two states of operation including a ready state and an active state, wherein, in the ready state, the received data is ready for processing by the at least one processor, wherein, in the active state, the received data is converted into a different format prior to processing by the at least one processor, and wherein the at least one processor receives at least one transition command from the receiver, causes data indicative of the at least one transition command to be stored in the memory device, transitions from the ready state to the active state based on a first transition command, and transitions from the active state to the ready state based on a second transition command.

In an example embodiment, the apparatus is an IC card.

In an example embodiment, the apparatus is a reader writer.

In an example embodiment, a method for data communication includes receiving a data frame including a first error detection code, determining whether the received data frame contains uncorrupted data using the first error detection code, determining a current status, wherein the current status is at least one of a first status and a second status, the first status indicating that the data in the data frame is ready to process, and the second status indicating that the data in the data frame is to be converted into a different format prior to processing, determining, in response to a determination that the received data frame contains uncorrupted data, whether the received data frame contains a status transition command for transitioning to at least one of the first status and the second status, transitioning to the second status based on the status transition command, removing at least one data portion from the received data frame, when the current status is the second status, calculating a second error detection code based on remaining data in the data frame, replacing the first error detection code with the second error detection code, forming a data block with the remaining data and the second error detection code, and processing the data in the data block.

In an example embodiment, the received data frame is a JIS protocol data frame and the data block is an ISO/IEC protocol data block.

In an example embodiment, the at least one data portion includes at least one of preamble data, synchronization code data, and length data.

In an example embodiment, a method for data communication includes processing data to form transmission data, calculating a first error detection code based on the transmission data, forming a data block with the processing result and the first error detection code, confirming that the transmission data in the data block is uncorrupted, adding at least one data portion to the data block to form a data frame, calculating a second error detection code based on the added at least one data portion and the transmission data, replacing the first error detection code with the second error detection code, and transmitting the data frame, wherein upon reception of the transmitted data frame, the data in the data frame is converted into a different format prior to processing.

In an example embodiment, the data block is an ISO/IEC protocol data block and the data frame is a JIS protocol data frame.

In an example embodiment, the transmission data is placed in an information field of the ISO/IEC protocol data block.

According to the example embodiments provided in the disclosure, data configured by a data structure or format different from a predetermined data structure or format can be transmitted and received using a communication scheme for transmitting and receiving data configured by the predetermined data structure or format.

Additional features and advantages are described herein, and will be apparent from the following Detailed Description and the figures.

### BRIEF DESCRIPTION OF THE FIGURES

Fig. 1 is a block diagram showing a configuration example of a data communication system.

Fig. 2 is a block diagram showing a configuration example of a reader writer.

Figs. 3A and 3B are diagrams for explanation of processing of converting a block into a frame.

Fig. 4A and 4B are diagrams for explanation of processing of converting a frame into a block.

Fig. 5 is a block diagram showing a configuration example of an IC card.

Fig. 6 shows status transition of the IC card.

Fig. 7 is a flowchart for explanation of reception processing.

Fig. 8 is a flowchart for explanation of command processing.

Fig. 9 shows an example of a format of REQ.

Fig. 10 shows an example of a format of a response to REQ.

Fig. 11 shows an example of a PICC identifier.

Fig. 12 shows an example of a response time descriptor.

Fig. 13 is a block diagram showing a configuration example of a computer.

### DETAILED DESCRIPTION

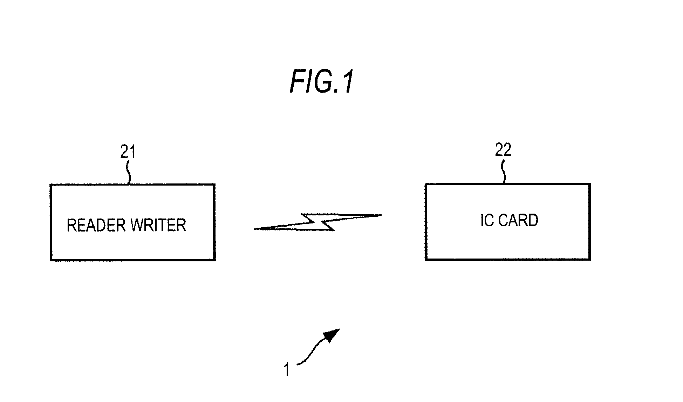

Fig. 1 shows a configuration example of a communication system 1 as an example embodiment.

The communication system 1 includes a reader writer 21 and an IC card 22. Between the reader writer 21 and the IC card 22, blocks (exchanged) as data configured by a data structure defined in ISO/IEC 14443-4 are transmitted and received, for example, via noncontact near-field wireless communication using a frame communication scheme for transmitting and receiving frames as data configured by a data structure defined in JIS X 6319-4 protocol.

The reader writer 21 receives a frame from the IC card 22 transmitted using the frame communication scheme and converts the received frame into a block. Then, the reader writer 21 performs corresponding processing on the block as a processing object.

Further, the reader writer 21 generates a block and converts the generated block into a frame. Then, the reader writer 21 transmits the converted frame using the frame communication scheme.

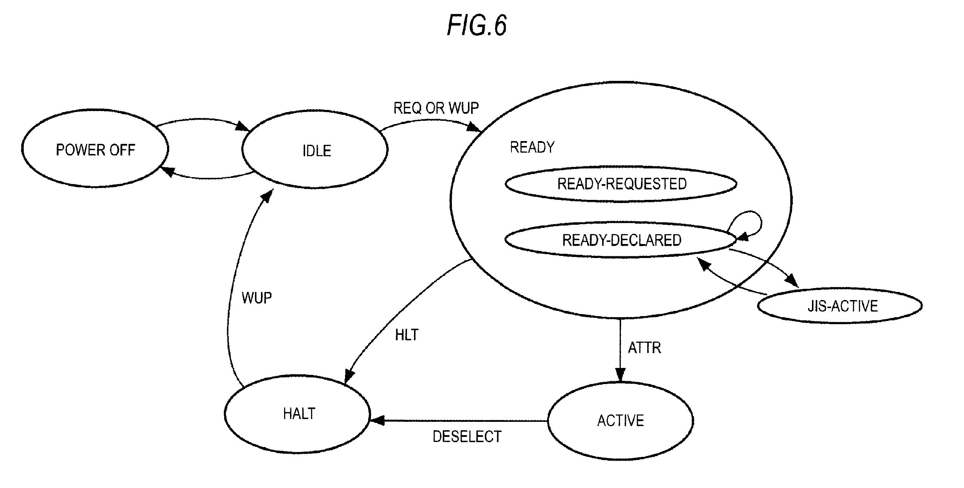

The IC card 22 receives a frame transmitted using the frame communication scheme from the reader writer 21 or the like, for example. Then, when a status transition command for transiting the status of the IC card 22 is included in the received frame, the IC card 22 is in one of IDLE status, READY status, ACTIVE status, and HALT status in response to the status transition command. Details of the status transition command and status transition by the IC card 22 will be explained by referring to Fig. 6, which will be described later.

When the IC card 22 is in the READY status, it functions as an IC card that performs corresponding processing on a frame as a processing object, and, in the ACTIVE status, it functions as an IC card that performs corresponding processing on a block as a processing object.

That is, for example, when the IC card 22 performs noncontact near-field wireless communication using the frame communication scheme with a reader writer that performs corresponding processing on a frame as an object, the reader writer turns the IC card 22 into READY status. Then, transmission and reception of frames are performed using the frame communication scheme between the IC card 22 and the reader writer.

Further, for example, when the IC card 22 performs noncontact near-field wireless communication using the frame communication scheme with the reader writer 21 that performs corresponding processing on a block as an object, the reader writer 21 turns the IC card 22 into ACTIVE status. Then, transmission and reception of the blocks that have been converted into frames are performed using the frame communication scheme between the IC card 22 and the reader writer 21.

As below, noncontact near-field wireless communication for transmission and reception of the blocks that have been converted into frames using the frame communication scheme between the reader writer 21 and the IC card 22 will be explained.

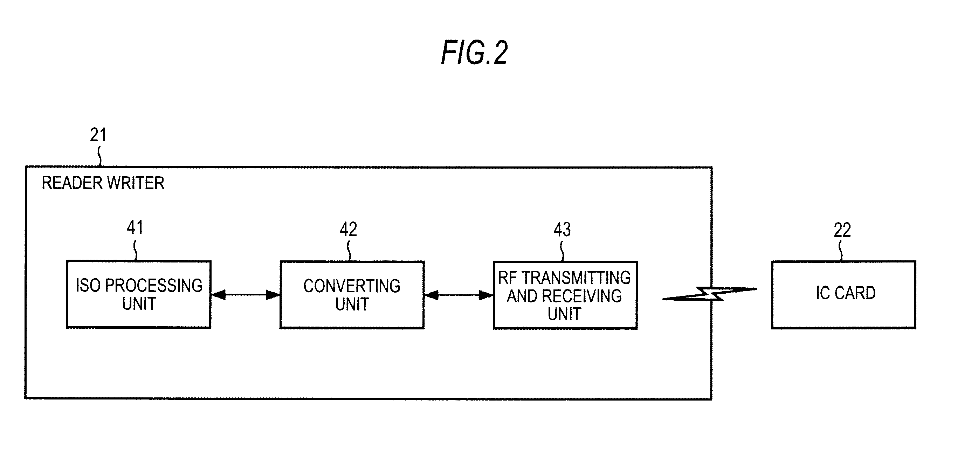

Next, Fig. 2 shows a configuration example of the reader writer 21.

The reader writer 21 includes an ISO processing unit 41, a converting unit 42, and an RF (radio frequency) transmitting and receiving unit 43.

The ISO processing unit 41 performs corresponding processing on a block having a data structure defined in ISO/IEC 14443-4 as a processing object.

That is, for example, the ISO processing unit 41 performs processing corresponding to a command contained in the block from the converting unit 42. Then, the ISO processing unit 41 generates a block containing a processing result obtained as a result and supplies it to the converting unit 42.

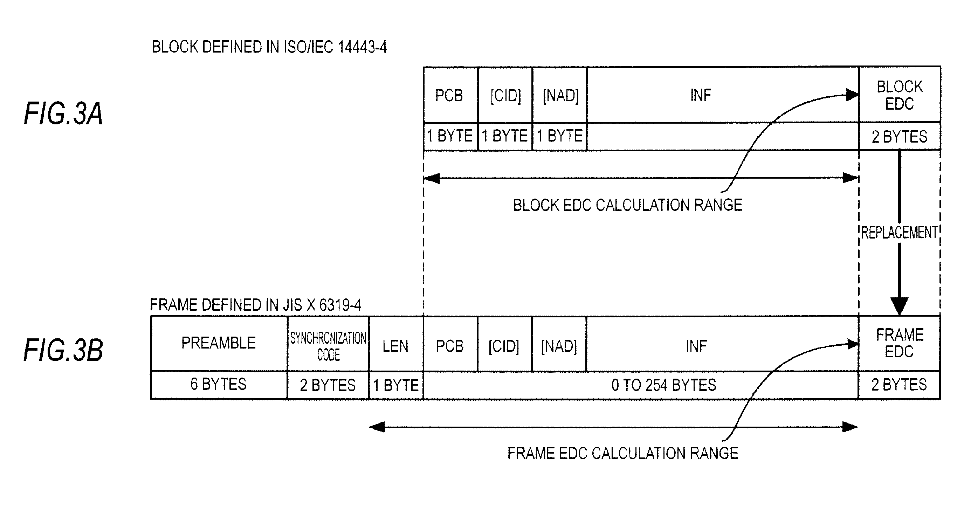

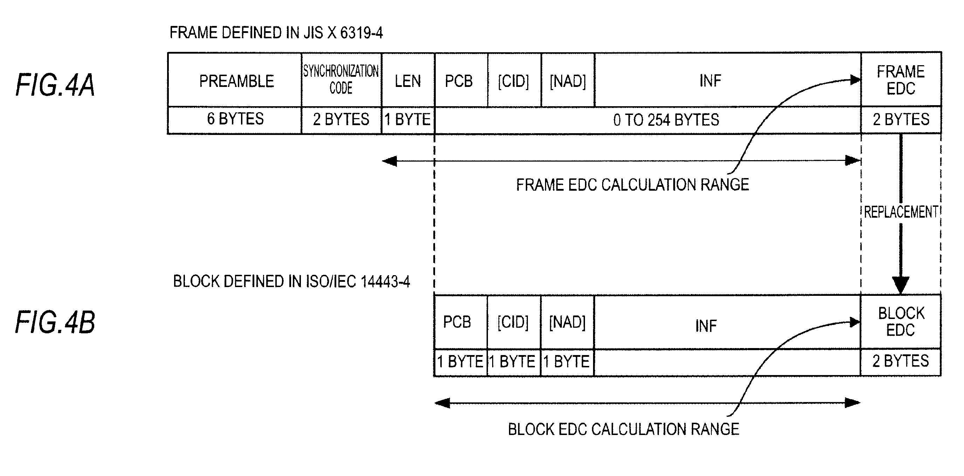

The converting unit 42 converts the block from the ISO processing unit 41 into a frame, and supplies it to the RF transmitting and receiving unit 43. Further, the converting unit 42 converts the frame from the RF transmitting and receiving unit 43 into a block, which is ready for processing, and supplies it to the ISO processing unit 41. Details of the processing performed by the converting unit 42 will be described later with reference to Figs. 3A and 3B and 4A and 4B.

The RF transmitting and receiving unit 43 receives a frame from the IC card 22, for example, using the frame communication scheme and supplies it to the converting unit 42. Further, the RF transmitting and receiving unit 43 transmits the frame from the converting unit 42 using the frame communication scheme.

Next, exemplary details of the processing performed by the converting unit 42 will be explained with reference to Figs. 3A and 3B and 4A and 4B.

Figs. 3A and 3B show that the converting unit 42 converts a block from the ISO processing unit 41 into a frame.

The block shown in Fig. 3A includes 1 byte of PCB (protocol control byte), 1 byte of CID (card identifier), 1 byte of NAD (node address), 1 to 251 bytes of INF (information field), and 2 bytes of EDC (error detection code).

The frame shown in Fig. 3B includes 6 bytes of preamble, 2 bytes of synchronization code, 1 byte of LEN (length) expressing the data length of INF, 1 byte of PCB, 1 byte of CID, 1 byte of NAD, 1 to 251 bytes of INF, and 2 bytes of EDC.

The EDC within the block shown in Fig. 3A is calculated based on data forming the PCB, CID, NAD, and INF within the block. The EDC within the block shown in Fig. 3A is used for determination (detection) as to whether an error has occurred or not in the data forming the PCB, CID, NAD, and INF within the block by CRC (cyclic redundancy check) or the like, for example.

Further, the EDC within the frame shown in Fig. 3B is calculated based on data forming the LEN, PCB, CID, NAD, and INF within the frame. The EDC within the frame shown in Fig. 3B is used for determination as to whether the data is uncorrupted or corrupted or whether an error has occurred or not in the data forming the LEN, PCB, CID, NAD, and INF within the frame using CRC or the like, for example.

Here, in the following explanation, the EDC within the block shown in Fig. 3A is referred to as "block EDC" and the EDC within the frame shown in Fig. 3B is referred to as "frame EDC".

The converting unit 42 determines whether an error has occurred in the data including the PCB, CID, NAD, and INF or not based on the block EDC as shown in Fig. 3A supplied from the ISO processing unit 41.

Then, if the converting unit 42 determines that no error has occurred in the data including the PCB, CID, NAD, and INF based on the block EDC, the unit adds preamble, synchronization code, and LEN to the head part of the block supplied from the ISO processing unit 41. Further, the converting unit 42 calculates a frame EDC corresponding to the data including the LEN, PCB, CID, NAD, and INF, and replaces it with the block EDC.

Thereby, the converting unit 42 converts the block as shown in Fig. 3A into the frame as shown in Fig. 3B and supplies it to the RF transmitting and receiving unit 43.

Next, Figs. 4A and 4B show that the converting unit 42 replaces a frame from the RF transmitting and receiving unit 43 into a block.

The frame shown in Fig. 4A expresses the same frame as that shown in Fig. 3B. The block shown in Fig. 4B expresses the same block as that shown in Fig. 3A.

The converting unit 42 determines whether an error has occurred in the data forming the LEN, PCB, CID, NAD, and INF or not based on the frame EDC as shown in Fig. 4A supplied from the RF transmitting and receiving unit 43.

Then, if the converting unit 42 determines that no error has occurred in the data including the LEN, PCB, CID, NAD, and INF based on the frame EDC, the unit deletes the preamble, the synchronization code, and the LEN added to the header or head part of the frame supplied from the RF transmitting and receiving unit 43. Further, the converting unit 42 calculates a block EDC corresponding to the data including the remaining PCB, CID, NAD, and INF, and replaces it with the frame EDC.

Thereby, the converting unit 42 converts the frame as shown in Fig. 4A into the block as shown in Fig. 4B and supplies it to the ISO processing unit 41.

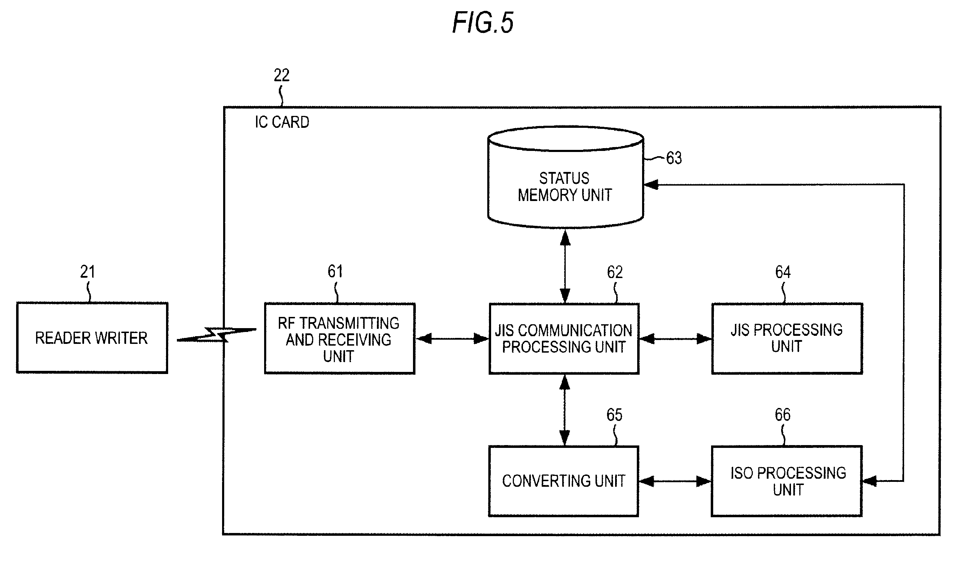

Next, Fig. 5 shows a configuration example of the IC card 22.

The IC card 22 includes an RF transmitting and receiving unit 61, a JIS communication processing unit 62, a status memory unit 63, a JIS processing unit 64, a converting unit 65, and an ISO processing unit 66.

The RF transmitting and receiving unit 61 receives a frame from the reader writer 21 which is ready for processing, for example, using the frame communication scheme and supplies it to the JIS communication processing unit 62. Further, the RF transmitting and receiving unit 61 transmits the frame from the JIS communication processing unit 62 using the frame communication scheme.

When a status transition command (e.g., REQ, WUP, ATTR, HLT, or the like, which will be described later) for transiting the status of the IC card 22 is contained in the frame from the RF transmitting and receiving unit 61, the JIS communication processing unit 62 updates status information held in the status memory unit 63 based on the status transition command.

The JIS communication processing unit 62 performs processing corresponding to the commands defined in JIS X 6319-4, however, WUP, ATTR, and HLT, which will be described later, are not originally defined in JIS X 6319-4.

Therefore, in the JIS communication processing unit 62 that performs processing corresponding to the commands defined in JIS X 6319-4, typically, it may be impossible to perform processing corresponding to WUP, ATTR, and HLT.

However, according to the present disclosure, JIS X 6319-4 is extended so that it may be possible to perform processing corresponding to WUP, ATTR, and HLT even in the JIS communication processing unit 62 that performs processing corresponding to the commands defined in JIS X 6319-4.

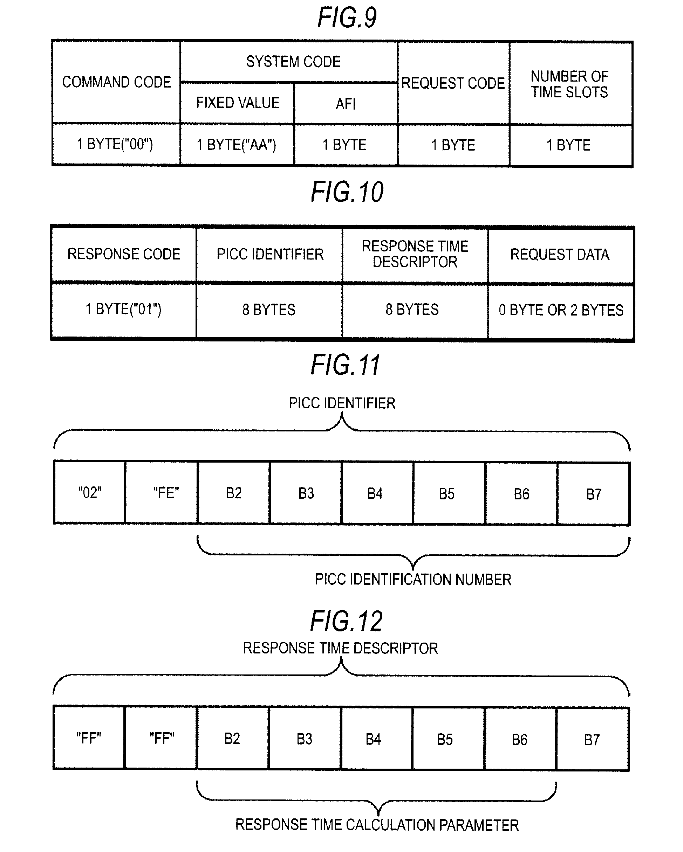

Further, according to the present disclosure, in order to maintain the backward compatibility with JIS X 6319-4:2005, REQ is extended by JIS X 6319-4. The extension of REQ by JIS X 6319-4 will be described later with reference to Figs. 9 to 12.

Furthermore, as the status transition commands, there is DESELECT for transiting the status of the IC card 22 from ACTIVE status to HALT status other than REQ, WUP, ATTR, and HLT, and DESELECT is defined in ISO/IEC 14443-4. Therefore, DESELECT is processed not by the JIS communication processing unit 62, but by the ISO processing unit 66, which will be described later.

When the status information held in the status memory unit 63 indicates READY status, the JIS communication processing unit 62 determines whether the processing command contained in the frame from the RF transmitting and receiving unit 61 (the command for allowing the IC card 22 to execute predetermined processing) is a PICC identifier matching command containing a PICC identifier for unique identification of the IC card 22 or not.

Then, if the JIS communication processing unit 62 determines that the processing command contained in the frame from the RF transmitting and receiving unit 61 is the PICC identifier matching command, the unit supplies the frame from the RF transmitting and receiving unit 61 to the JIS processing unit 64.

Further, when the status information held in the status memory unit 63 indicates ACTIVE status, the JIS communication processing unit 62 supplies the frame from the RF transmitting and receiving unit 61 to the converting unit 65.

Furthermore, the JIS communication processing unit 62 supplies the frame from the JIS processing unit 64 or the converting unit 65 to the RF transmitting and receiving unit 61.

The status memory unit 63 holds the status information indicating the status of the IC card 22. The status memory unit 63 holds status information indicating POWER OFF status in advance.

The JIS processing unit 64 performs processing corresponding to the processing commands defined in JIS X 6319-4 on the frame as a processing object. That is, for example, the JIS processing unit 64 performs processing corresponding to the commands defined in JIS X 6319-4 contained in the frame from the JIS communication processing unit 62. Further, the JIS processing unit 64 generates a frame containing a processing result obtained as a result of processing and supplies it to the JIS communication processing unit 62.

The converting unit 65 converts the frame from the JIS communication processing unit 62 into a block like the converting unit 42 in Fig. 2, and supplies it to the ISO processing unit 66. Further, the converting unit 65 converts the block from the ISO processing unit 66 into a frame, and supplies it to the JIS communication processing unit 62.

The ISO processing unit 66 performs processing corresponding to processing commands defined in ISO/IEC 14443-4 on a block as a processing object. That is, for example, the ISO processing unit 66 performs processing corresponding to processing commands defined in ISO/IEC 14443-4 contained in the block from the converting unit 65. Further, the ISO processing unit 66 generates a block containing a processing result obtained as a result of the processing and supplies it to the converting unit 65.

Further, the ISO processing unit 66 updates the status information indicating ACTIVE status held in the status memory unit 63 to the status information indicating HALT status based on the DESELECT as the status transition command defined in ISO/IEC 14443-4 contained in the block from the converting unit 65.

Next, status transition of the IC card 22 will be explained with reference to Fig. 6, illustrating example states of operation and .transition between states or status.

When the IC card 22 is not present within an RF field (magnetic field) generated by the reader writer 21 or the like, for example, the status of the IC card 22 is turned into POWER OFF status.

Further, in POWER OFF status, when the IC card 22 is held over the reader writer 21 within the RF field generated by the reader writer 21 or the like, the status of the IC card 22 transits from POWER OFF status to IDLE status.

In IDLE status, when the IC card 22 is out of the RF field generated by the reader writer 21 or the like, the status of the IC card 22 transits from IDLE status to POWER OFF status. Not only in IDLE status, but also in any of READY status, ACTIVE status, HALT status, or JIS-ACTIVE status, which will be described later, when the IC card 22 is out of the RF field generated by the reader writer 21 or the like, the status of the IC card 22 transits to POWER OFF status.

Further, in IDLE status, when REQ (request command) or WUP (wakeup command) is received, the status of the IC card 22 transits from IDLE status to READY-REQUESTED status of READY status.

In READY-REQUESTED status in READY status, when the IC card 22 transmits a response to the received REQ or WUP (containing the PICC identifier of the IC card 22), the status of the IC card 22 transits from READY-REQUESTED status to READY-DECLARED status or READY-REQUESTED substate to READY-DECLARED substate.

Since the IC card 22 transmits the response to REQ or WUP, for example, the reader writer 21 acquires the PICC identifier of the IC card 22 contained in the response to REQ or WUP. Thereby, the reader writer 21 becomes able to transmit processing commands or the like to the IC card 22 using the acquired PICC identifier.

In READY-DECLARED status in READY status, when the processing command contained in the frame received by the IC card 22 is a PICC identifier matching command, the status of the IC card transits from READY-DECLARED status to JIS-ACTIVE status. Then, in JIS-ACTIVE status, when the IC card 22 performs processing corresponding to the processing command and transmits a response to the processing command, the status of the IC card 22 transits (returns) from JIS-ACTIVE status to READY-DECLARED status.

Further, in READY-DECLARED status, when the processing command contained in the frame received by the IC card 22 is not a PICC identifier matching command, the status of the IC card 22 remains READY-DECLARED status.

In READY-DECLARED status, when the IC card 22 receives REQ or WUP from the reader writer 21, the status of the IC card 22 transits from READY-DECLARED status to READY-REQUESTED status. Then, in READY-REQUESTED status, the same processing in the case where REQ or WUP is received in IDLE status and the status transits from IDLE status to READY-REQUESTED is performed.

In READY status or READY state (in either of READY-REQUESTED status or READY-DECLARED status), when HLT (halt command) is received, a response to HLT is transmitted, and then, the status of the IC card 22 transits from READY status or state to HALT status or state.

Further, in READY status, when ATTR (attribute command) is received, a response to ATTR is transmitted, and then, the status of the IC card 22 transits from READY status or state to ACTIVE status or state.

In ACTIVE status, when the command contained in the frame received by the IC card 22 is a processing command containing the PICC identifier of the IC card 22, the IC card 22 performs processing corresponding to the processing command. In this case, the status of the IC card 22 remains ACTIVE status.

In ACTIVE status or state, when DESELECT is received, a response to DESELECT is transmitted, and then, the status of the IC card 22 transits from ACTIVE status to HALT status.

In HALT status or state, WUP is received, a response to WUP is transmitted, and then, the status of the IC card 22 transits from HALT status to IDLE status or state.

Next, reception processing of receiving a frame from the reader writer 21 or the like by the IC card 22 will be explained.

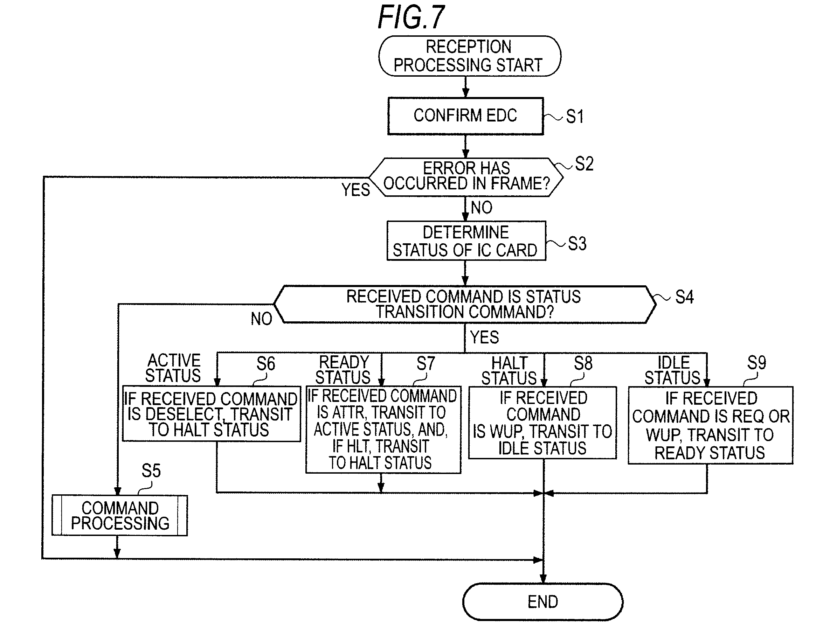

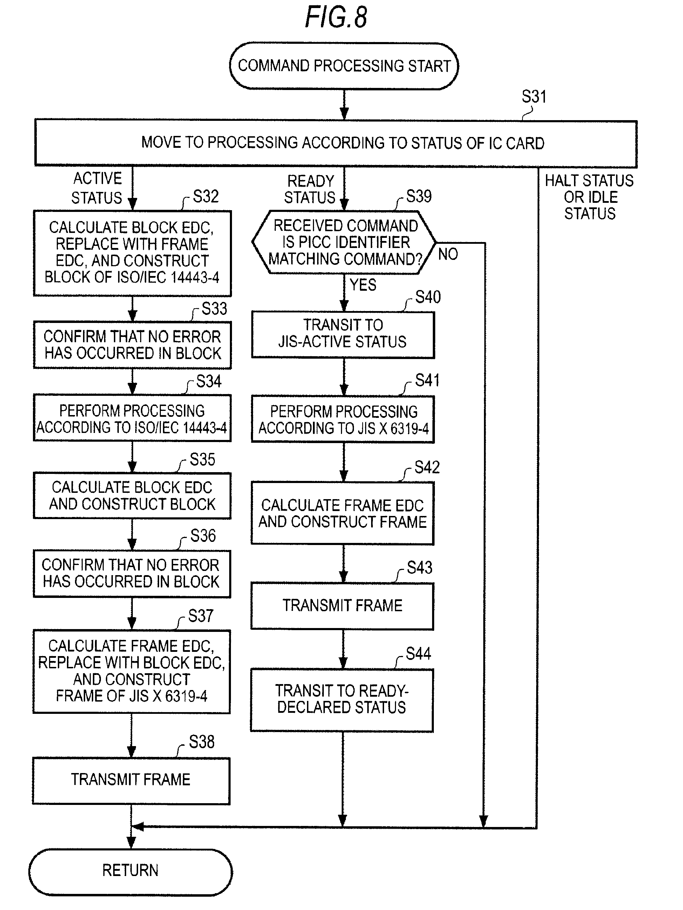

Figs. 7 and 8 are flowcharts for explanation of an example embodiment of reception processing. The example reception processing is started when a frame is transmitted from the reader writer 21 or the like, for example.

On the assumption that the status of the IC card 22 is ACTIVE status, READY status, HALT status, or IDLE status, the reception processing will be explained.

At step S1, the RF transmitting and receiving unit 61 receives a frame (containing frame EDC) from the reader writer 21, and supplies it to the JIS communication processing unit 62. The JIS communication processing unit 62 determines whether an error has occurred in the frame or not based on the frame EDC from the RF transmitting and receiving unit 61.

At step S2, if the JIS communication processing unit 62 determines that an error has occurred in the frame based on the frame EDC from the RF transmitting and receiving unit 61, the unit discards (ignores) the frame from the RF transmitting and receiving unit 61 and ends the processing.

Further, at step S2, if the JIS communication processing unit 62 determines that no error has occurred in the frame based on the frame EDC from the RF transmitting and receiving unit 61, and moves the processing to step S3.

At step S3, the JIS communication processing unit 62 reads out the status information held in the status memory unit 63. Then, the JIS communication processing unit 62 determines the status of the IC card 22 is ACTIVE status, READY status, HALT status, or IDLE status based on the read out status information, and moves the processing to step S4.

At step S4, the JIS communication processing unit 62 determines whether the command within the frame from the RF transmitting and receiving unit 61 is a status transition command or not.

At step S4, if the JIS communication processing unit 62 determines that the command within the frame from the RF transmitting and receiving unit 61 is not a status transition command, the unit moves the processing to step S5.

At step S5, if the IC card 22 is in ACTIVE status, processing by the ISO processing unit 66 is performed, and, if the IC card 22 is in READY status, command processing of performing processing by the JIS processing unit 64 is performed. The details of the command processing will be described later with reference to Fig. 8.

At step S4, if the JIS communication processing unit 62 determines that the command within the frame from the RF transmitting and receiving unit 61 is a status transition command, the unit moves the processing to one of step S6 to step S9 according to the status of the IC card 22 determined in the processing at step S3.

That is, if the status of the IC card 22 determined in the processing at step S3 is ACTIVE status, the JIS communication processing unit 62 moves the processing to step S6, if READY status, moves the processing to step S7, if HALT status, moves the processing to step S8, and, if IDLE status, moves the processing to step S9.

At step S6, the status of the IC card 22 is ACTIVE status. Accordingly, the JIS communication processing unit 62 supplies the frame from the RF transmitting and receiving unit 61 to the converting unit 65. The converting unit 65 converts the frame from the JIS communication processing unit 62 into a block and supplies it to the ISO processing unit 66.

If the command within the block from the converting unit 65 is DESELECT, the ISO processing unit 66 transmits a response to DESELECT via the converting unit 65, the JIS communication processing unit 62, and the RF transmitting and receiving unit 61. Then, the ISO processing unit 66 generates status information indicating HALT status and supplies it to the status memory unit 63 for overwriting. Thereby, the status of the IC card 22 indicated by the status information held in the status memory unit 63 transits from ACTIVE status to HALT status.

At step S7, if the command within the frame from the RF transmitting and receiving unit 61 is ATTR, the JIS communication processing unit 62 transmits a response to ATTR via the RF transmitting and receiving unit 61. Then, the JIS communication processing unit 62 generates status information indicating ACTIVE status and supplies it to the status memory unit 63 for overwriting. Thereby, the status of the IC card 22 indicated by the status information held in the status memory unit 63 transits from READY status to ACTIVE status.

Further, if the command within the frame from the RF transmitting and receiving unit 61 is HLT, the JIS communication processing unit 62 transmits a response to HLT via the RF transmitting and receiving unit 61. Then, the JIS communication processing unit 62 generates status information indicating HALT status and supplies it to the status memory unit 63 for overwriting. Thereby, the status of the IC card 22 indicated by the status information held in the status memory unit 63 transits from READY status to HALT status.

In READY-DECLARED status in READY status, if the command within the frame from the RF transmitting and receiving unit 61 is REQ or WUP, the JIS communication processing unit 62 transmits a response to REQ or WUP via the RF transmitting and receiving unit 61. Then, the JIS communication processing unit 62 generates status information indicating READY-REQUESTED status in READY status and supplies it to the status memory unit 63 for overwriting. Thereby, the status of the IC card 22 indicated by the status information held in the status memory unit 63 transits from READY-DECLARED status to READY-REQUESTED status in READY status.

At step S8, if the command within the frame from the RF transmitting and receiving unit 61 is WUP, the JIS communication processing unit 62 transmits a response to WUP via the RF transmitting and receiving unit 61. Then, the JIS communication processing unit 62 generates status information indicating IDLE status and supplies it to the status memory unit 63 for overwriting. Thereby, the status of the IC card 22 indicated by the status information held in the status memory unit 63 transits from HALT status to IDLE status.

At step S9, if the command within the frame from the RF transmitting and receiving unit 61 is REQ or WUP, the JIS communication processing unit 62 transmits a response to REQ or WUP via the RF transmitting and receiving unit 61. Then, the JIS communication processing unit 62 generates status information indicating READY-REQUESTED status in READY status and supplies it to the status memory unit 63 for overwriting. Thereby, the status of the IC card 22 indicated by the status information held in the status memory unit 63 transits from IDLE status to READY-REQUESTED status in READY status. This is the end of the example reception processing.

Next, example details of command processing at step S5 in Fig. 7 will be explained. Fig. 8 is a flowchart for an example explanation of command processing.

At step S31, the JIS communication processing unit 62 moves the processing to step according to the status of the IC card 22 determined in the processing at step S3 in Fig. 7.

At step S31, if the status of the IC card 22 determined in the processing at step S3 in Fig. 7 is ACTIVE status, the JIS communication processing unit 62 supplies the frame from the RF transmitting and receiving unit 61 to the converting unit 65, and moves the processing to step S32.

At step S32, the converting unit 65 converts the frame from the JIS communication processing unit 62 into a block and supplies it to the ISO processing unit 66.

That is, for example, the converting unit 65 deletes the preamble, synchronization code, and LEN within the frame supplied from the JIS communication processing unit 62 and calculates a block EDC corresponding to data including the remaining PCB, CID, NAD, and INF.

Then, the converting unit 65 replaces the frame EDC supplied from the JIS communication processing unit 62 with the calculated block EDC, generates a block, and supplies it to the ISO processing unit 66.

At step S33, the ISO processing unit 66 determines whether an error has occurred in the block from the converting unit 65 or not based on the block EDC contained in the block from the converting unit 65. Then, the ISO processing unit 66 confirms that no error has occurred in the block from the converting unit 65 based on the determination result, and then, moves the processing to step S34.

Note that, at step S33, if it may be impossible to confirm that no error has occurred in the block from the converting unit 65, a block is generated again at step S32 until it becomes possible to confirm that no error has occurred in the block from the converting unit 65.

At step S34, the ISO processing unit 66 performs corresponding processing based on commands defined in ISO/IEC 14443-4 contained in the block from the converting unit 65. Moreover, the received data is processed after is has been converted into a different format (e.g., from a JIS data frame to an ISO data block).

At step S35, the ISO processing unit 66 generates a block containing a processing result obtained as a result of the processing at step S34. That is, for example, the ISO processing unit 66 adds corresponding PCB, CID, and NAD to INF containing the processing result obtained by the processing at step S34.

Then, the ISO processing unit 66 calculates a corresponding block EDC based on the INF, PCB, CID, and NAD, adds the calculated block EDC to the INF to which PCB, CID, and NAD have been added, and supplies a block obtained as a result to the converting unit 65.

At step S36, the converting unit 65 determines whether an error has occurred in the block or not based on the block EDC from the ISO processing unit 66. Then, the converting unit 65 confirms that no error has occurred in the block from the ISO processing unit 66 based on the determination result, and then, moves the processing to step 537.

Note that, at step S36, if it may be impossible to confirm that no error has occurred in the block from the ISO processing unit 66, a block is generated again at step S35 until it becomes possible to confirm that no error has occurred in the block from the ISO processing unit 66.

At step S37, the converting unit 65 converts the block from the ISO processing unit 66 into a frame and supplies it to the JIS communication processing unit 62.

That is, for example, the converting unit 65 adds a preamble, synchronization code, and LEN to the block supplied from the ISO processing unit 66, and calculates a frame EDC corresponding to the data including PCB, CID, NAD, INF, and added LEN.

Then, the converting unit 65 replaces the calculated frame EDC with the block EDC supplied from the ISO processing unit 66, and supplies a frame obtained as a result to the JIS communication processing unit 62.

At step 538, the JIS communication processing unit 62 supplies the frame supplied from the converting unit 65 to the RF transmitting and receiving unit 61. Then, the RF transmitting and receiving unit 61 transmits the frame supplied from the JIS communication processing unit 62 using the frame communication frame, and returns the processing to step S5 in Fig. 7.

Further, at step S31, if the status of the IC card 22 determined in the processing at step S3 in Fig. 7 is READY status, the JIS communication processing unit 62 supplies the frame from the RF transmitting and receiving unit 61 to the JIS processing unit 64, and moves the processing to step S39.

At step S39, the JIS processing unit 64 determines whether the command compliant to JIS X 6319-4 contained in the frame from the JIS communication processing unit 62 is a PICC identifier matching command or not.

At step S39, if the JIS processing unit 64 determines that the command compliant to JIS X 6319-4 contained in the frame from the JIS communication processing unit 62 is not a PICC identifier matching command, the unit returns the processing to step S5 in Fig. 7.

Further, at step S39, if the JIS processing unit 64 determines that the command compliant to JIS X 6319-4 contained in the frame from the JIS communication processing unit 62 is a PICC identifier matching command, the unit moves the processing to step S40.

At step S40, the JIS processing unit 64 generates status information indicating JIS-ACTIVE status and supplies it to the status memory unit 63 for overwriting. Thereby, the status of the IC card 22 indicated by the status information held in the status memory unit 63 transits from READY (READY-DECLARED) status to JIS-ACTIVE status.

At step S41, the JIS processing unit 64 performs corresponding processing based on the command compliant to JIS X 6319-4 contained in the frame from the JIS communication processing unit 62. Moreover, the received data in the data frame is ready for processing upon reception without conversion into a different data format.

At step S42, the JIS processing unit 64 generates a frame containing a processing result obtained by the processing at step S41. That is, for example, the JIS processing unit 64 adds corresponding preamble, synchronization code, LEN, PCB, CID, and NAD to INF containing the processing result obtained by the processing at step S41.

Then, the JIS processing unit 64 calculates a corresponding frame EDC based on the INF, LEN, PCB, CID, and NAD, adds the calculated frame EDC to INF to which preamble, synchronization code, LEN, PCB, CID, and NAD have been added, and supplies a frame obtained as a result to the JIS communication processing unit 62.

At step S43, the JIS communication processing unit 62 supplies the frame supplied from the JIS processing unit 64 to the RF transmitting and receiving unit 61. Then, the RF transmitting and receiving unit 61 transmits the frame supplied from the JIS processing unit 64 using the frame communication frame.

At step S44, the JIS processing unit 64 generates status information indicating READY status (READY-DECLARED status) and supplies it to the status memory unit 63 for overwriting. Thereby, the status of the IC card 22 indicated by the status information held in the status memory unit 63 transits from JIS-ACTIVE status to READY status. After the processing at step S44 ends, the JIS processing unit 64 returns the processing to step S5 in Fig. 7.

At step S31, if the status of the IC card 22 determined in the processing at step S3 in Fig. 7 is HALT status or IDLE status, the JIS communication processing unit 62 returns the processing to step S5 in Fig. 7.

As explained above, in the example reception processing, the status of the IC card 22 is transited in response to the status transition command. Further, in the command processing in the reception processing, the IC card 22 functions as an IC card with a frame as a processing object in READY status, and functions as an IC card with a block as a processing object in ACTIVE status.

Therefore, for example, in the IC card 22, for a frame and a block having different data structures or formats, corresponding processing can be performed.

Further, for example, when the IC card 22 is in ACTIVE status, the converting unit 65 converts the frame from the reader writer 21 into a block that can be processed by the ISO processing unit 66 and converts the block from the ISO processing unit 66 into a frame that can be transmitted using the frame communication scheme.

Therefore, between the reader writer 21 and the IC card 22, blocks can be transmitted and received (exchanged) using the frame communication scheme for transmission and reception of frames.

Further, in the example command processing, the received frame is converted into a block at step S32, and the confirmation that no error has occurred in the block after conversion is made at step 533.

Therefore, at step S34, processing can be performed on the block after conversion in which no error has occurred.

Furthermore, in the example command processing, a block is generated at step S35, and the confirmation that no error has occurred in the generated block is made at step S36.

Therefore, at step 537, the block in which no error has occurred can be converted into a frame.

In an example embodiment, JIS X 6319-4 may be extended so that both reader writers, of the reader writer that transmits commands defined in JIS X 6319-4 and the reader writer 21 that transmits commands defined in ISO/IEC 14443-4, can perform noncontact near-field wireless communication using the frame communication scheme in the IC card 22.

That is, for example, in this example embodiment, JIS X 6319-4 is extended to include the above described ATTR, WUP, and HLT as commands defined in JIS X 6319-4, and the JIS communication processing unit 62 performs processing corresponding to the commands defined in extended JIS X 6319-4. Thereby, the JIS communication processing unit 62 can update the status of the IC card 22 according to the above described ATTR, WUP, and HLT.

In addition, in this example embodiment, REQ etc. defined in JIS X 6319-4 are extended so that the backward compatibility with JIS X 6319-4:2005 can be maintained.

Next, Fig. 9 shows an example of a format of REQ extended in JIS X 6319-4.

The REQ in Fig. 9 includes 1 byte of command code, system code, request code, and time slot code.

The example command code is set to "00". The value quoted by "" expresses a hexadecimal number.

The example system code includes a fixed value and AFI (application family identifier). The fixed value is set to "AA". In the system code, AFI is set to "FF" when a field is not specified.

AFI is a value compliant to the definition of ISO/IEC 14443-3 (JIS X 6322-3). In AFI, "00" and values having low four bits of zero are not used.

Further, in order to maintain the backward compatibility with JIS X 6319-4:2005, also "FFFF" is a value of a system code that does not specify a field in addition to the system code "AAFF".

When the request code is "00", it indicates that REQ has compatibility with REQ defined in JIS X 6319-4:2005. Further, when the request code is "01", the request code indicates that a system code information field is added to a response to REQ.

Furthermore, when the request code is "02", the request code indicates that transmission protocol capability is added to a response to REQ.

In the request code, "03" to "FF" are RFU (reserved for future use).

The time slot code indicates the maximum value of the time slots that the IC card 22 should accommodate. As the time slot code, any of "00" indicating one time slot, "01" indicating two time slots, "03" indicating four time slots, "07" indicating eight time slots, or "0F" indicating 16 time slots may be employed.

Next, Fig. 10 shows an example of a response to REQ.

The example response to REQ shown in Fig. 10 includes 1 byte of response code, 8 bytes of PICC identifier, 8 bytes of response time descriptor, and 0 byte or 2 bytes of request data.

The response code is set to "01". The P1CC identifier is an ID for identification of the IC card 22.

The response time descriptor is 8 bytes of information used for calculation of the response time of the IC card 22, and the high (leading) 2 bytes are respectively set to "FF", and the lowermost 1 byte is set to "FF".

When the request code contained in REQ is "01", for example, the request data is (data representing) a system code information field.

Further, when the request code contained in REQ is "02", for example, the request data is (data representing) transmission protocol capability.

Next, Fig. 11 shows an example of a PICC identifier contained in a response to REQ.

The example PICC identifier is a numeric value of 8 bytes, and the leading 2 bytes are "02FE" and the remaining 6 bytes are a PICC identification number for identification of the IC card as PICC.

In the PICC identifier, it may be possible that the values other than the leading 2 bytes of "02FE" are used in the communication system different from the communication system 1 to which the embodiment of the invention is applied or the like, and thus, values other than "02FE" are not assigned to the leading 2 bytes.

Next, Fig. 12 shows an example of a response time descriptor contained in a response to REQ.

The example response time descriptor is a value of 8 bytes used for calculation of the response time by the IC card 22 for the received command.

In the response time descriptor, the leading 2 bytes are set to "FFFF". Further, the lowermost byte B7 is reserved for future use, and should be set to "FF".

In an example embodiment, the IC card 22 functions as either, an IC card that processes a frame, or an IC card that processes a block depending on the status of the IC card 22. However, in place of the IC card 22, the reader writer 21 may be adapted to function as either of a reader writer that processes a frame or a reader writer that processes a block depending on the status of the reader writer 21.

In this case, the reader writer 21 can perform noncontact near-field wireless communication using the frame communication scheme with an IC card that processes a frame or an IC card that processes a block.

Further, in this example embodiment, since blocks are transmitted and received using the frame communication scheme, commands defined in ISO/IEC 7816-4 or the like, for example, may be included in the blocks and transmitted and received using the frame communication scheme.

Furthermore, in this example embodiment, the reader writer 21 and the IC card 22 that transmit and receive blocks using the frame communication scheme have been explained, however, various embodiments may be applied to any communication device that transmits and receives blocks using the frame communication scheme.

Further, in an example embodiment, JIS X 6319-4 is extended so that processing corresponding to WUP, ATTR, and HLT can also be performed in the JIS communication processing unit 62 that performs processing corresponding to commands defined in JIS X 6319-4, however, not limited to that.

That is, for example, JIS X 6319-4 may be extended so that processing corresponding to not only WUP, ATTR, and HLT but also DESELECT can also be performed in the JIS communication processing unit 62.

In this case, the JIS communication processing unit 62 can update status information held in the status memory unit 63 according to not only WUP, ATTR, and HLT but also DESELECT. Accordingly, when the status transition command is DESELECT, the status information can be updated more rapidly compared to the embodiment that supplies the DESELECT from the JIS communication processing unit 62 to the ISO processing unit 66 via the converting unit 65.

Further, in this example embodiment, the block compliant to the prescription of ISO/IEC 14443-4 is converted into a frame, however, a block to be converted into a frame is not limited to that. That is, for example, blocks having any data structure can be employed as long as the blocks can be converted into frames by the conversion method that has been explained in Figs. 3A to 4B. In this case, the data structure of the block is extended (changed) in the prescription of ISO/IEC 14443-4.

Furthermore, in this example embodiment, the frames compliant to the prescription of JIS X 6319-4 are passed between the reader writer 21 and the IC card 22, however, frames to be passed are not limited to that. That is, for example, frames having any data structure can be employed as long as the frames can be passed between the reader writer 21 and the IC card 22. In this case, the data structure of the frame is extended in the prescription of JIS X 6319-4.

Next, the above described series of example processing may be executed by specialized hardware or executed by software. When the series of processing is executed by software, programs forming the software are installed from a recording medium in a so-called embedded computer or, for example, a general-purpose computer that can execute various functions when various programs are installed.

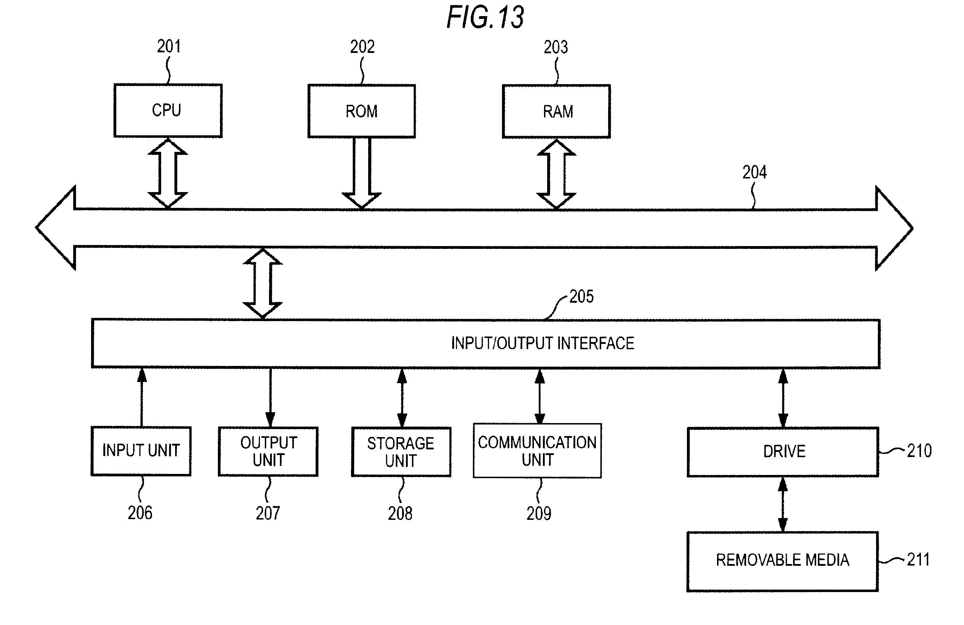

Fig. 13 shows a configuration example of a computer that executes the above described series of processing.

A CPU (central processing unit) 201 executes various kinds of processing according to programs stored in a ROM (read only memory) 202 or a storage unit 208. In a RAM (random access memory) 203, programs and data executed by the CPU 201 are appropriately stored. These CPU 201, ROM 202, and RAM 203 may be mutually connected by a bus 204.

Further, an input/output interface 205 is connected to the CPU 201 via the bus 204. To the input/output interface 205, an input unit 206 including a keyboard, a mouse, a microphone, etc. and an output unit 207 including a display, a speaker, etc. are connected. The CPU 201 executes various kinds of processing in response to commands input from the input unit 206. Then, the CPU 201 outputs processing results to the output unit 207.

The storage unit 208 connected to the input/output interface 205 includes a hard disc, for example, and stores programs executed by the CPU 201 and various kinds of data. A communication unit 209 may communicate with an external device via a network such as Internet and local area network.

Further, programs may be acquired via the communication unit 209 and stored in the storage unit 208.

When a removable media 211 such as a magnetic disc, an optical disc, a magnetooptical disc, or a semiconductor memory is mounted, a drive 210 connected to the input/output interface 205 drives the media and acquires programs and data recorded therein. The acquired programs and data are transferred to the storage unit 208 and stored according to need.

The recording medium that records programs that can be installed in a computer and executed by the computer includes the removable media 211 such as a magnetic disc (including a flexible disc), an optical disc (including a CD-ROM (compact disc-read only memory) and a DVD (digital versatile disc)), a magnetooptical disc (including an MD (mini-disc)), the ROM 202 in which programs are temporarily or permanently recorded, a hard disc forming the storage unit 208, or the like. Recording of programs in the recording medium may be performed using a wired or wireless communication medium such as local area network, Internet, or digital satellite broadcasting via the communication unit 209 as an interface such as a router and a modem according to need as shown in Fig. 13.

In this specification, the example steps described in the flowcharts contain various processing that is time-sequentially performed, however, the processing is not necessarily time-sequentially performed, and may be performed in parallel or individually.

Further, in the specification, the system refers to the entire apparatus including plural devices.

It should be understood that various changes and modifications to the presently preferred embodiments described herein will be apparent to those skilled in the art. Such changes and modifications can be made without departing from the spirit and scope of the present subject matter and without diminishing its intended advantages. It is therefore intended that such changes and modifications be covered by the appended claims.

The invention is claimed as follows:

## Claims

1. A system for data communication, comprising:
a first device including:
a transmitter for transmitting data; and
a first processor operably coupled to the transmitter, the first processor preparing data for transmission in at least two states of operation including a ready state and an active state; and
a second device including:
a receiver for receiving data;
a memory device; and
a second processor operably coupled to the receiver and to the memory device, the second processor providing the at least two states of operation including the ready state and the active state for processing the received data upon reception of the data;
wherein, in the ready state, the received data is ready for processing upon reception of the data;
wherein, in the active state, the received data is converted into a different format prior to processing upon reception of the data;
wherein the first processor provides to the transmitter and the transmitter transmits (i) first data associated with the ready state, which is ready for processing upon reception, (ii) a first transition command associated with transitioning from the ready state to the active state, (iii) second data associated with the active state, which is converted into a different format upon reception, and (iv) a second transition command associated with transitioning from the active state to the ready state;
wherein the receiver receives and provides to the second processor the first data, the first transition command, the second data, and the second transition command, and the second processor causes data indicative of the at least one transition command to be stored in the memory device; and
wherein the second processor (i) processes the first data in the ready state, (ii) transitions to the active state based on the first transition command, (iii) processes the second data in the active state, and (iv) transitions to the ready state based on the second transition command.

2. The system of Claim 1, wherein, in the ready state, data is processed using JIS X 6319-4 protocol.

3. The system of Claim 2, wherein in the ready state, upon reception of the data, the received data is formatted according to the JIS X 6319-4 protocol.

4. The system of Claim 1, 2 or 3, wherein:
the ready state includes a ready-requested substate and a ready-declared substate;
in the ready-requested substate, a response including an identifier is provided to transition into the ready-declared substate; and
in the ready-declared substate, processing is performed when a processing command including the identifier is received.

5. The system of Claim 4, wherein in the ready-declared substate, the processing command including the identifier causes a transition from the ready-declared substate to a JIS-active state, in which the processing is performed.

6. The system of Claim 4 or 5, wherein the ready-declared substate causes commands to be processed and responses to be formed using JIS X 6319-4 protocol.

7. The system of one of the Claims 1 to 6, wherein, in the active state, data is processed using at least one of ISO/IEC 7816-4 protocol and ISO/IEC 14443-4 protocol.

8. The system of Claim 7, wherein in the active state, upon reception of the data, the received data is formatted according to a protocol other than the at least one of ISO/IEC 7816-4 protocol and ISO/IEC 14443-4 protocol.

9. The system of one of the Claims 1 to 8, wherein at least one transition command causes a transition to a halt state, which prohibits a direct transition from the halt state to the ready state and from the halt state to the active state.

10. The system of Claim 9, wherein the at least one transition command includes a third transition command and a fourth transition command, the third transition command causing a transition from the ready state to the halt state and the fourth transition command causing a transition from the active state to the halt state.

11. The system of Claim 10, wherein a third transition command causes a transition from the halt state to an idle state, which allows for a direct transition from the idle state to the ready state based on a fourth transition command.

12. The system of one of the Claims 1 to 11, wherein the first device is a reader writer and the second device is an integrated circuit card ("IC card").

13. An apparatus for data communication, comprising:
a transmitter for transmitting data; and
at least one processor operably coupled to the transmitter, the at least one processor preparing data for transmission in at least two states of operation including a ready state and an active state;
wherein, in the ready state, data ready for transmission is ready for processing upon reception of the data;
wherein, in the active state, data ready for transmission is converted into a different format prior to processing upon reception of the data;
wherein the at least one processor provides to the transmitter (i) first data associated with the ready state, which is ready for processing upon reception, (ii) a first transition command associated with transitioning from the ready state to the active state, (iii) second data associated with the active state, which is converted into a different format upon reception, and (iv) a second transition command associated with transitioning from the active state to the ready state.

14. The apparatus of Claim 13, wherein the apparatus is an IC card.

15. The apparatus of Claim 13, wherein the apparatus is a reader writer.

16. An apparatus for data communication, comprising:
a receiver for receiving data;
a memory device; and
at least one processor operably coupled to the receiver and to the memory device, the at least one processor providing at least two states of operation including a ready state and an active state;
wherein, in the ready state, the received data is ready for processing by the at least one processor;
wherein, in the active state, the received data is converted into a different format prior to processing by the at least one processor; and
wherein the at least one processor receives at least one transition command from the receiver, causes data indicative of the at least one transition command to be stored in the memory device, transitions from the ready state to the active state based on a first transition command, and transitions from the active state to the ready state based on a second transition command.

17. The apparatus of Claim 16, wherein the apparatus is an IC card.

18. The apparatus of Claim 16, wherein the apparatus is a reader writer.

19. A method for data communication, comprising:
receiving a data frame including a first error detection code;
determining whether the received data frame contains uncorrupted data using the first error detection code;
determining a current status, wherein the current status is at least one of a first status and a second status, the first status indicating that the data in the data frame is ready to process, and the second status indicating that the data in the data frame is to be converted into a different format prior to processing;
determining, in response to a determination that the received data frame contains uncorrupted data, whether the received data frame contains a status transition command for transitioning to at least one of the first status and the second status;
transitioning to the second status based on the status transition command;
removing at least one data portion from the received data frame, when the current status is the second status;
calculating a second error detection code based on remaining data in the data frame;
replacing the first error detection code with the second error detection code;
forming a data block with the remaining data and the second error detection code; and
processing the data in the data block.

20. The method of Claim 19, wherein the received data frame is a JIS protocol data frame and the data block is an ISO/IEC protocol data block.

21. The method of Claim 19, wherein the at least one data portion includes at least one of preamble data, synchronization code data, and length data.

22. A method for data communication, comprising:
processing data to form transmission data;
calculating a first error detection code based on the transmission data;
forming a data block with the processing result and the first error detection code;
confirming that the transmission data in the data block is uncorrupted;
adding at least one data portion to the data block to form a data frame;
calculating a second error detection code based on the added at least one data portion and the transmission data;
replacing the first error detection code with the second error detection code; and
transmitting the data frame;
wherein upon reception of the transmitted data frame, the data in the data frame is converted into a different format prior to processing.

23. The method of Claim 22, wherein the data block is an ISO/IEC protocol data block and the data frame is a JIS protocol data frame.

24. The method of Claim 23, wherein the transmission data is placed in an information field of the ISO/IEC protocol data block.
